# EUROPEAN PATENT SPECIFICATION

(11) **EP 1 843 232 B1**
(45) Date of publication and mention of the grant of the patent: **18.09.2013**
(21) Application number: 06711998.2
(22) Date of filing: 19.01.2006
(51) Int. Cl.: G05B 19/418

(54) **PRODUCTION SCHEDULING SYSTEM**
PRODUKTIONSKOORDINATIONSSYSTEM
SYSTEME DE PROGRAMMATION DE LA PRODUCTION

(30) Priority: 20.01.2005 JP 2005012935
(43) Date of publication of application: 10.10.2007
(73) Proprietor: Kao Corporation, Chuo-ku Tokyo 103-8210 (JP)
(72) Inventor: SUGIMOTO, Hirokatsu, o, Wakayama-shi, Wakayama, 6408580 (JP); ISHIKAWA, Shinji, o, Wakayama-shi, Wakayama, 6408580 (JP); SEKINE, Fumimaro, o, 1318501 (JP)
(74) Representative: HOFFMANN EITLE
(86) International application number: PCT/JP2006/300752
(87) International publication number: WO 2006/077930

(56) References cited:
- WO-A1-00/60523
- WO-A2-01/93086
- JP-A- 04 019 056
- JP-A- 08 077 278
- JP-A- 2003 022 119
- JP-A- 2004 145 591
- JP-A- 2004 171 484
- JP-A- 2004 310 325
- US-A- 5 819 232
- US-A1- 2003 050 817
- US-A1- 2004 260 592
- US-B1- 6 216 109

## Description

### TECHNICAL FIELD

The present invention relates to a production scheduling system for scheduling production schedules and working patterns in association with demands for products to be produced in a production management of a plant.

### BACKGROUND ART

Conventionally, in a plant or the like having one or a plurality of production facilities for producing multiple kinds of products in the production facilities, it is necessary to plan which kind of product is produced in each production facility on a temporal axis, so production management to decide in what production system a product should be produced in a production process of the product, for each prescribed period determined previously (e.g., one month), is important. As a supporting device therefor, a computerized scheduling device for production planning has been known in the plant. This device includes a system which performs scheduling of production schedule based on information on estimated product demand for each month for example, and decides based on the determined production schedules.

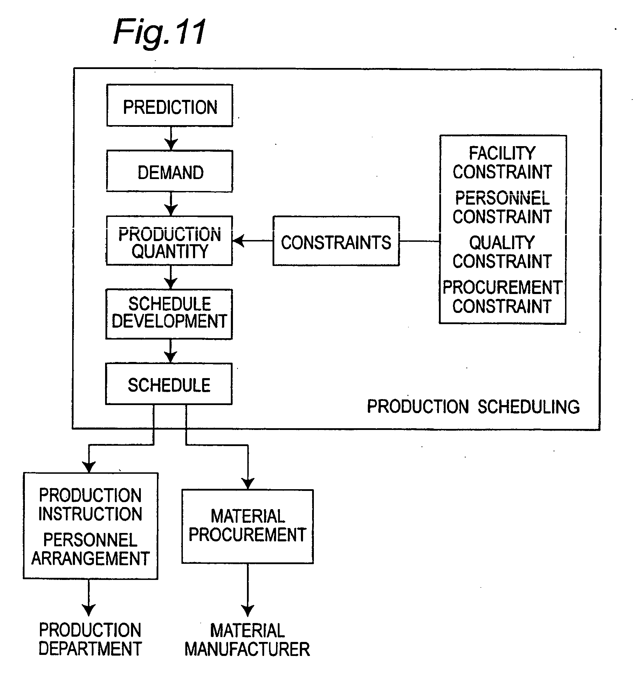

As shown in Fig. 11, the production scheduling system performs demand estimation for each predetermined period, and when information on quantity to be produced and resources and capacity of production is given as an input, it outputs a daily production schedule for satisfying various constraints in facility, personnel and quality. Then, based on the outputted information on production schedule, a person in charge of the production management department gives production instructions and personnel arrangement to the production department, and also performs material procurement to material manufacturers to thereby operate production lines.

Planning of such a production plan is an important duty of the manager of a plant, which has been performed on the desk through much trial and error. However, since it is required to promptly respond to product diversification, an increase in material kinds corresponding thereto, complexity in production process and demand trends are required, a supporting device utilizing a computer has been developed. According to such a supporting device, a production plan for several months later can be planned immediately so as to operate the production facility reasonably. Thereby, even when the demand trend changes, it is possible to cope with it promptly without dropping the operating ratio of the production facility.

A specific system performing scheduling of the production schedule is disclosed in, for example, Japanese Laid-Open Patent Publication No. H5-181871.

In this system, for kinds and quantity of products carried in sequentially, if at least a part of the materials is not supplied, the system calculates the available date and the planned amount capable of being supplied of the material on the temporal axis, and on the basis thereof, calculates the earliest possible production date for the subject product kind. According to this system, it is possible to make reasonable production planning even if any constraint is involved in the material supply conditions, whereby production rationalization can be realized in subcontractors producing parts in a state where orders are placed sequentially.

WO00/60523 A1 relates to a computer system used in a manufacturing resource planning for determining the daily demand for raw materials and other manufacturing resources used in the manufacturing process. The system determines the total demand for a manufacturing resource for each day over several time periods specified by the user of the system. Within a first time period, from the current day up to demand time fence, the total demand may be altered, even though a quantity of products is already in production. The system of WO00/60523 A1 utilises minimum and maximum finished goods inventory targets to either supply additional products or consume excess products being made.

### DISCLOSURE OF THE INVENTION

### PROBLEMS TO BE SOLVED BY THE INVENTION

However, the production scheduling system cannot cope with commodity demand which varies on a daily basis. That is, the operating pattern determined corresponding to the commodity demand varying on a daily basis must be changed flexibly. However, in the production scheduling system, the schedule shift determined previously for a certain period (for each month) is managed collectively, so it is necessary to change the schedule shift for a certain period as a whole.

Further, the production scheduling system mentioned above only focuses attention on schedule development. That is, it calculates how much material can be supplied when, on the temporal axis, from the stock quantity and incoming schedule of the material, to thereby calculate the earliest possible production date for the subject product kind. Therefore, other determining items such as how to determine the production quantity for each product must be still performed based on the experience of the person in charge. Further, in a state where EVA and the capital cost have not been defined, the schedule development itself has been so performed that stocks, switching, and parameter of personnel cost are formulated in one-dimensional cost, and based on the evaluation axis, the optimum resolution is found in a seeking manner. In other words, it has been the actual state that the optimum resolution is sought based on the experience on the evaluation axis in which the relationship between the parameters is not well-known.

By performing production management under such conditions, ratio of disturbance elements such as demand fluctuation affecting the schedule development is large, so there are many cases in which the schedule development determined with the production scheduling system does not match the actual state.

The present invention has been developed in view of such a background, and is to provide a production scheduling system capable of reducing an influence of disturbance by giving a clear evaluation axis.

### MEANS FOR SOLVING THE PROBLEMS

In order to solve the technical problems described above, the present invention provides a production scheduling system having the configuration according to the appended claims.

### EFFECTS OF THE INVENTION

According to the present invention, it is possible to adjust working styles by calculating the stock quantity based on predicted sales quantity from now to the future, and by combining operating patterns on the basis of working hours required in a prescribed period (e.g., three months) for securing the stock quantity. Therefore, it is possible to perform selection processing of operating pattern flexibly.

Further, by allocating production schedule such that stock will not exceed the maximum stocks based on the batch size of the product to be manufactured in one manufacturing, it is possible to manage the production quantity of the products easily.

Further, in the case of manufacturing another kind of product in one line, when switching a product to be produced, it is possible to calculate the time required for producing the product without any error by calculating working hours required in a prescribed period by adding hours required for the switching.

### BRIEF DESCRIPTION OF THE DRAWINGS

These and other aspects and features of the present invention will become clear from the following description taken in conjunction with the preferred embodiments thereof with reference to the accompanying drawings, in which:
Fig. 1 is a block diagram showing the configuration of a production scheduling system according to an embodiment of the present invention;
Fig. 2 is a function block diagram in which an arithmetic processor of a management server in Fig. 1 is classified functionally;
Fig. 3 is a block diagram showing the configuration of a memory of the management server in Fig. 1;
Fig. 4 is a flowchart showing the processing flow of the production scheduling system in Fig. 1;
Fig. 5 is a processing flowchart about stock incorporating processing and demand prediction calculation processing;
Fig. 6 is a processing flowchart showing scheduling processing of the production scheduling system in Fig. 1;
Fig. 7 is a chart showing changes over time due to stock quantity, production schedule and demand prediction;
Fig. 8A is an illustration explaining the relationship between the number of switching times and production quantity;
Fig. 8B is a chart explaining the relationship between operating hours and the number of switching times;
Fig. 9 is a chart explaining the relationship between allocation of production schedule of a product and a required capacity line;
Fig. 10 is a chart explaining a selecting method of operating patterns exceeding the required capacity line in Fig. 9; and
Fig. 11 is a block diagram showing a conventional scheduling system.

### BEST MODE FOR CARRYING OUT THE INVENTION

Before the description of the present invention proceeds, it is to be noted that like parts are designated by like reference numerals throughout the accompanying drawings.

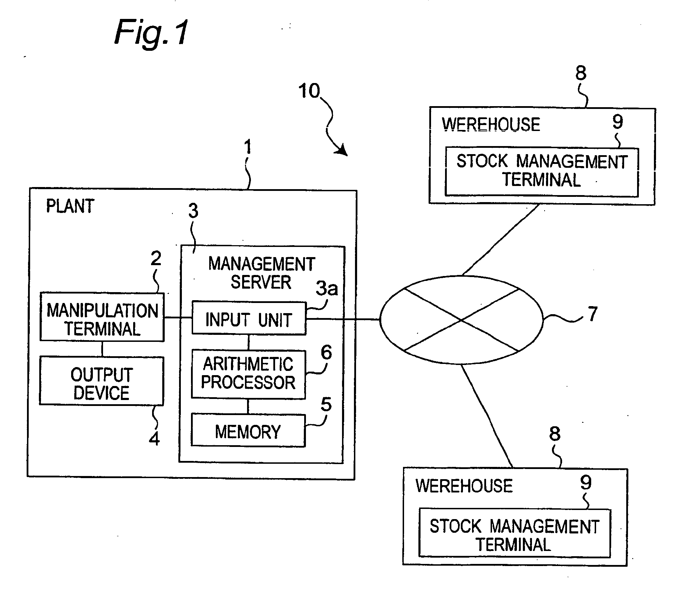

Fig. 1 is a block diagram showing the configuration of a production scheduling system according an embodiment of the present invention. The production scheduling system is to plan an operating schedule of a production facility used in a production plant of products. In the present embodiment, the case of determining an operating pattern in a production line in which a product such as shampoo, rinse, body soap or detergent is produced by blending a plurality of materials (intermediate), and the product is filled in prescribed containers by quantity predetermined for each product, which are packed and produced to be in a shipping form capable of being shipped, will be described as an example. Although the specific configuration of the production scheduling system will be described below, the following configuration is a configuration of a processing example in production facilities to which the production scheduling system is used.

In Fig. 1, the system 10 includes: a management server 3 provided to a plant 1 in which production facilities that scheduling of operating schedule is performed are installed; a manipulation terminal 4 connected with the management server 3; and stock management terminals 9 provided to product distribution centers (distribution bases) 8 and connected over a network 7 with the management server 3 of the plant 1. As the network 7, the Internet may be used, but a dedicated line for the system 10 can also be used.

The warehouse 8 is a facility, provided at a place different from the plant, for storing products produced in the plant as stocks and distributing products in accordance with orders. Further, the stock management terminal 9 manages the stock quantity for each product in each warehouse 8. Note that warehouses include warehouses for merely storing products and distribution bases for distributing merchandises throughout the country.

The management server 3 includes an input unit 3a, a memory 5 and an arithmetic processor 6. The input unit 3a controls input of information required for the management server. Specifically, it controls actions to input information from the stock management terminals 9 and information from the manipulation terminal 2 into the management server 3 over the network 7. The manipulation terminal 2 performs input of various kinds of information and the like for carrying out operating scheduling of the product facilities described below, and performs processing action such as scheduling by using data stored on the management server 3. The information processed by the management server 3 is outputted from the output terminal 4 connected with the manipulation terminal 2, and outputs it as plan form output on a sheet, print output, magnetic disc output, optical disc output and in other output formats convenient for using or evaluating the plan created by the scheduling device.

In the memory 5 connected with the arithmetic processor 6 of the management server 3, system programs for production scheduling system and various databases are stored. The system programs and various databases are to be provided as computer programs. The computer programs are installed in the management server 3 via record media capable of storing computer programs and computer networks to thereby provide the management server 3 with functions described below.

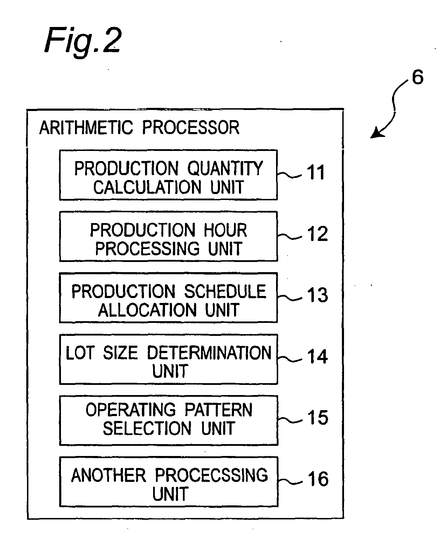

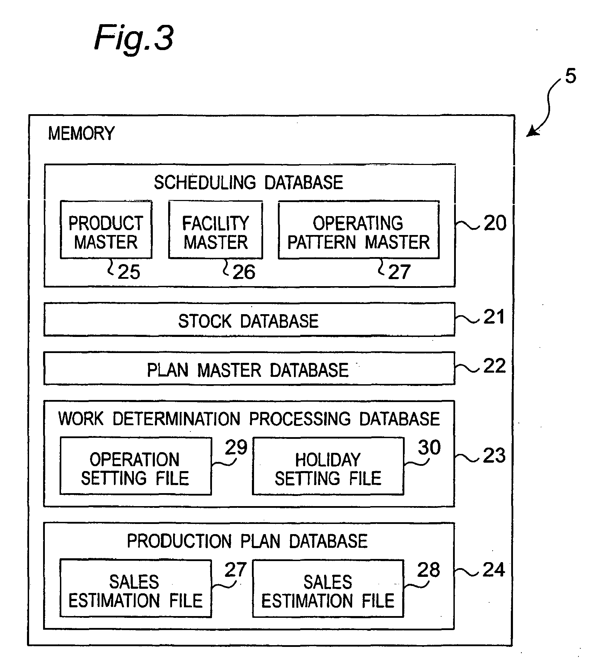

Fig. 2 is a function block diagram in which the arithmetic processor of the management server 3 in Fig. 1 is classified functionally. Fig. 3 is a block diagram showing the configuration of the memory of the management server 3 in Fig. 1. The arithmetic processor 6 is for performing control processing of the production scheduling system 1 based on the scheduling database 20 and various kinds of data in the memory 5 shown in Fig. 3, and generally consists of the CPU of the management server 3. The arithmetic processor 6 is classified into function blocks of a production quantity processing unit 11, a production hour processing unit 12, a production schedule allocation unit 13, an operating pattern selection unit 15, and another processing unit 16.

As shown in Fig. 3, the memory 5 stores a scheduling database 20, a stock database 21, a plan master database 22, a production plan database 23 and a work determination processing database 24. Although not shown, system programs are stored as well.

The scheduling database 20 includes data of a product master 26, a facility operation pattern master 26 and an operating pattern master 27. The product master 25 includes data relating to a product to be produced in the production facility, storing information on product code, product name, product type, package unit, production pattern, intermediate used for production and the like. The facility master 22 includes data relating to the production facilities in the plant for producing products, storing information on facility names and switching times. The operating pattern master 27 includes information on daily operating patterns of the facilities, storing operating pattern names, holiday settings, total operating hours per day, information on start/end time of operating patterns, and personnel cost information per day. In the present embodiment, three patterns shown in table 1 are stored as the operating patterns.

**[Table 1]**

| Name | Holidays | Total working hours (h) | Start/end time |
|---|---|---|---|
| Daytime shift | Saturday, Sunday, National holidays | 7.5 | 8:30 to 12:00, 13:00 to 17:00 |
| Time difference | Sunday, National holidays | 10.5 | 8:00 to 12:00, 13:00 to 17:00, 17:30 to 20:00 |
| Rotating shift | None | 21 | 8:00 to 12:00, 13:00 to 20:00, 21:00 to 24:00, 1:00 to 8:00 |

The stock database 26 is a database relating to stocks for each product. That is, it manages and stores stocks for each product transmitted from the stock management terminal 9 in the plant and warehouses 8. The stock database stores information on the maximum value and the minimum value of stocks for each product. The maximum value of stocks is the maximum value that the product stocks can be stored in the current warehouses inside and outside of the plant. The stock maximum value is determined mainly depending on the size of the warehouses. Further, for the stock maximum value, the value can be changed depending on various situations in which stock should be reduced because product design will be switched soon or product package design will be changed soon.

On the other hand, the minimum value of stocks is, in the present embodiment, the planned total number of sales in the center within a prescribed period, to be stored in the distribution center. The minimum stocks may be set in any way. For example, it may be a state where no product left in the warehouses inside the plant. In other words, how to set the minimum stocks is determined based on the balance of a problem of excessive stocks and a risk of running out of a supply of the products. The value can be changed flexibly.

The plan master database 22 is a database storing various kinds of information in order that the production quantity calculation unit 11 of the arithmetic processor 6 predicts product demand. The product quantity calculation unit 11 performs demand prediction based on information such as the stock quantity for each product managed in the stock database 26 and sales performance up to the last year, to thereby calculate the number of products which should be produced within the prescribed period and sale.

The work determination processing database 27 is a database storing information for determining production hours required for producing the number of products to be produced in the period (three months in the present embodiment) calculated by the production hour calculation unit 12 of the arithmetic processor 6. As specific information, available production quantity per unit time (e.g., one hour) of a product, to be produced by the facility managed by the facility master and the like, is stored. This database includes, an operation setting file 27 for each facility for setting working days for each facility and a holiday setting file 28 for setting holidays for the facility. Note that holidays for a facility include Saturday, Sunday and National holidays of no working days and days that production using the facility cannot be carried out due to maintenance of the facility and the like, which information is previously inputted in the holiday setting file 28.

The production plan database 33 is a database used in the case of allocating production schedule of products to be produced in the production facility, by the production schedule allocation unit 13 of the arithmetic processor 6. This database includes a sales prediction file 29 and a sales expectation file 30. Based on such information, the production schedule allocation unit 13 performs allocation of a production schedule while considering how much quantity of products should be produced until when.

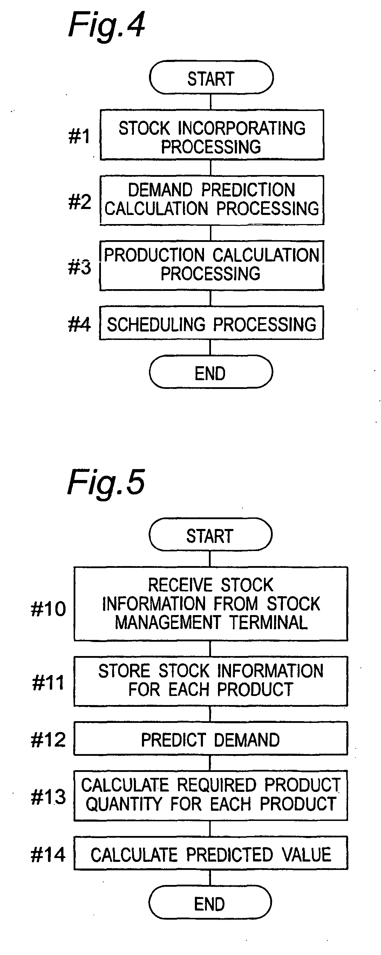

Next, operation of the production scheduling system according to the present embodiment will be described. Fig. 4 is a flowchart showing the processing flow of the production scheduling system of the present invention.

The production scheduling system is for planning a working schedule by a three-month unit as described above, which adjusts the scheduling corresponding to changes in the market updated on a daily basis. Note that a unit of scheduling of the working schedule is not limited to three months, and may be set within one to six months. The main processing of the production scheduling system is controlled by the arithmetic processor 6. First, the production scheduling system checks the stock quantity transmitted from the stock management terminal 9 and performs incorporating processing for each subject product (#1). Information on the stock quantity for each product is transmitted from each stock management terminal 9, and managed and stored collectively in the stock database 26, and the stock quantity at the time of starting the prescribed period for performing scheduling is read. Information on the stock quantity is used in processing the production quantity as described later.

Then, based on the given information on stocks and information on the plan master database 22, the production scheduling system 1 performs sales prediction for several months thereafter by statistical processing on the basis of the sales performance in at least past two years (#2). Then, based on the value of the predicted sales quantity, the production quantity of product which should be produced within the prescribed period is calculated (#3). When calculation of the production quantity which should be produced for a desired product to be produced in the same production facility ends, scheduling processing is performed to determine when and in what timing the product is to be produced (#4).

Hereinafter, each processing will be explained in detail. Fig. 5 shows a processing flowchart for stock incorporating processing and demand prediction calculation processing. In the stock incorporating processing, information on stocks at the time of transmission for each product is transmitted from each stock management terminal 9 of the warehouse 8. The management server 3 receives the stock information (#10). The management server 3 stores the received stock information on a stock database by each product (#11). Note that the minimum stock in the future is a safety stock quantity which should be held as stocks at the minimum, and is the minimum stock quantity for not causing stockout. In this case, it is calculated by summing the flow basic stock and a predicted error. The flow basic stock is the stock quantity that the respective distribution centers must hold at the minimum, and is the total of all distribution centers. Further, a predicted error is an error prediction value of the limit not deviating from the sales prediction (calculated from recent trend and quantity of same quarter of the previous year).

Then, the management server 3 performs demand prediction based on the information (#12). Demand prediction is calculated based on the stock information and the sales prediction. Demand prediction is performed by using systems described in Japanese Laid-Open Patent Publications No. H7-175787 and No. H8-221384 for example, so the detailed description is omitted here.

Then, the management server 3 calculates required production quantity of each product which should be calculated within a prescribed period from the information on demand prediction (#13). As described above, the production quantity calculation of a product is performed by the production quantity calculation unit 11 of the management server 3. For required production quantity, demand prediction is performed based on information on stock quantity of each product managed in the stock database 26 and sales performance up to the last year, whereby the production quantity of the product which should be produced within the prescribed period is calculated. Specifically, based on the result in the same period last year and demand results in the previous three months, production quantity of each product is calculated.

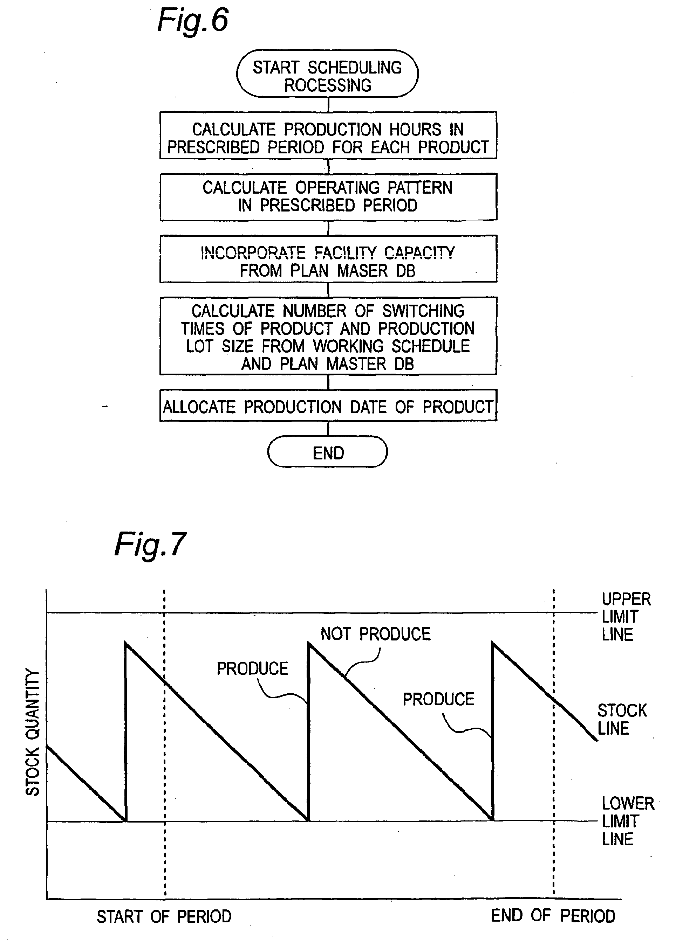

Next, scheduling processing will be described. Fig. 6 is a processing flowchart of scheduling processing. When the quantity of product which should be produced within a prescribed period is determined, the management server 3 computes required production hours required for producing a product which should be produced within the prescribed period (#20). This processing is performed by the production hour processing unit 12. The required production hours are derived by dividing the production quantity by production quantity capable of being produced per hour (facility capacity) for each product to be produced, based on information stored on the work determination processing database 27.

When the production hours within a prescribed period are determined, work patterns within the prescribed period are calculated (#21), and based on the information stored on the plan master database 22, the facility capacity is read out (#22). Facility capacity stores information such as schedule in which the facility can operate and the like for example, and stores schedule in which the facility cannot operate due to facility checking and construction, for example. Then, from the work schedule and plan master database, the number of switching times of the product and production lot size is calculated (#23). Based on these kinds of information, the production schedule allocating unit 13 allocates which product should be produced until when (#24). Schedule allocation is performed while comparing values of estimated stocks stored on the stock database. That is, it is calculated in the stock quantity at the time of reception stored on the stock database and by the demand prediction calculation processing (#2), and based on the number of merchandize demands stored on the plan master database, the production schedule is developed such that the stock quantity for each product falls between the maximum stocks and the minimum stocks.

Specifically, as shown in Fig. 7, the stock quality is shown as a graph in a sawtooth shape due to the product production schedule and demand prediction. That is, at a timing that the products are produced, the stock quantity increases, and at a timing of not being produced, the stock quantity decreases gradually corresponding to daily demand. In this way, in order that the stock quantity which decreases gradually due to the number of demands and increases abruptly by the production falls between the maximum value and the minimum value, production schedule is allocated for each product.

Note that in the step #23 described above, it is preferable that the production schedule allocation unit 13 cause the number of switching times of products to be produced to be the largest within a range capable of securing the necessary production hours. That is, by increasing the number of switching times, the number of products manufactured in one production schedule is reduced, whereby the stocks can be reduced.

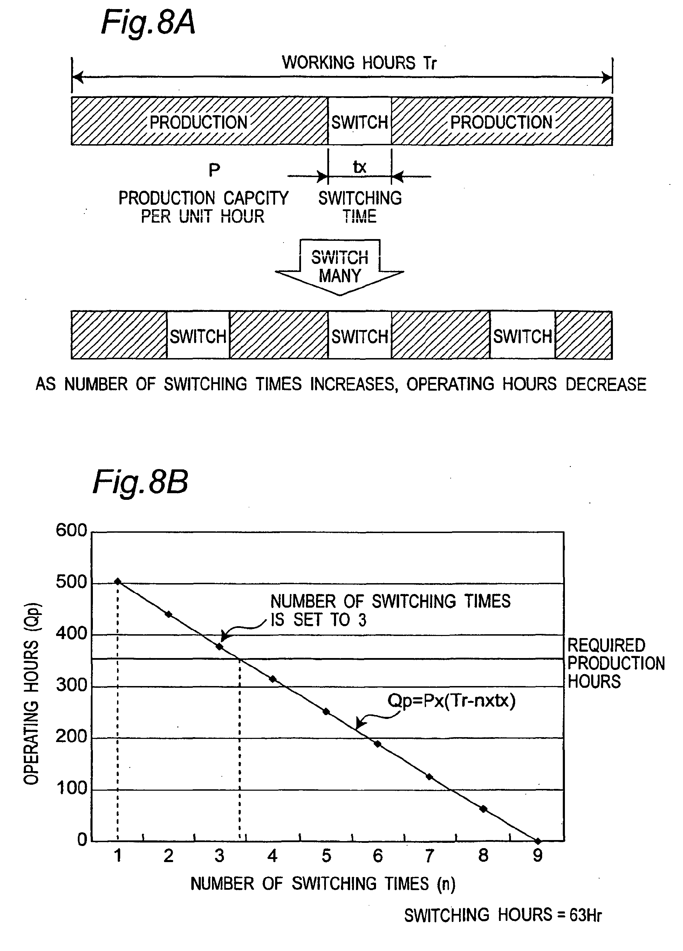

The relationship between the number of switching times and production quantity is generally in a relationship of inverse proportion. That is, as shown in Fig. 8A, in the same working hours (Tr), when requiring switching time (tx) and the number (n) of switching times increases, the operating hours (Qp) producing the product in the prescribed period become shorter. As shown in Fig. 8B, the production schedule allocation unit 13 sets the number of switching times to be the maximum so as not to become shorter than the required production hours calculated by the production hour processing unit 12, since the operating hours Qp have a decreasing relationship corresponding to the number of switching times.

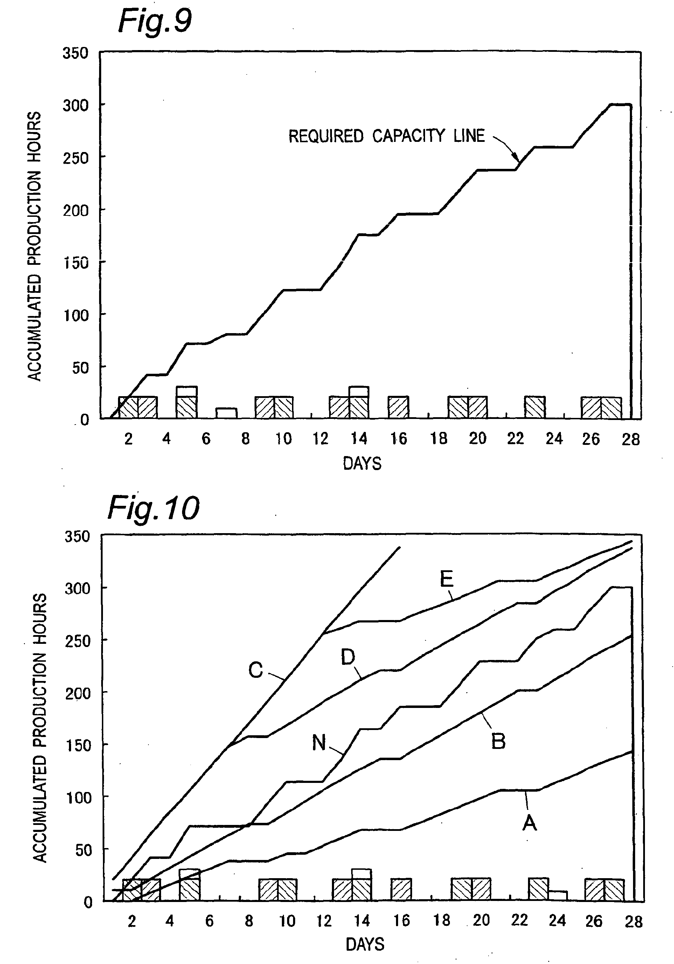

For the production schedule of each product determined in this manner, three kinds of products are allocated within a prescribed period as shown in Fig. 9. The required capacity line of each schedule is shown as the accumulation of the allocated schedules.

Then, the operating pattern selection unit selects an operating pattern of each schedule so as not to fall below the required capacity line. Specifically, the production quantity for each product determined in the above-described step is set to exceed the capacity line of hours required for production, and then, the minimum operating pattern exceeding the capacity line is selected. At this time, it is so set that daytime shifts are included most, among the operating patterns. That is, the personnel cost is the lowest in a daytime shift, and it is an operating pattern which is the most advantageous in safety and operational view, so the operating pattern selection is performed so as to include a large number of daytime shifts.

In order to describe a specific example of operating pattern selection processing understandably, explanation will be given by using a graph shown in Fig. 10. The graph in Fig. 10 is a graph for setting an operating pattern exceeding the required capacity line of each product defined as shown in Fig. 9. In Fig. 10, N is a capacity line calculated as described above, A is a line showing a change in working hours in the case of performing an operating pattern of daytime shift, and B is a line showing a change in working hours in the case of performing an operating pattern of time difference shift. Since the both lines do not exceed the required capacity line shown by N, in the state shown in Fig. 10, an operating pattern of rotating shift shown by C is added.

During the operating pattern of rotating shift, time difference work and daytime shift are switched from time to time. The switching timing is time difference work shown by D and daytime shift shown in E. As described above, selection processing of operating pattern in this case is to select an operating pattern so as to increase the daytime shifts, so an operating pattern shown by E in Fig. 10 is selected so as not to deviate from the required capacity line N, compared with the operating pattern D. Further, in the operating pattern shown by E, if the pattern exceeds the required capacity line N excessively, more personnel cost is required, so it is possible to adjust the switching timing of the operating pattern appropriately.

By performing working according to the operating pattern for a prescribed number of days determined as described above, it is possible to select a reliable working style easily while ensuring the stock quantity between the minimum value and the maximum value of the demand prediction and stocks.

As described above, according to the production scheduling system of the present embodiment, working style is adjusted by calculating stock quantity based on sales quantity predicted from now to the future, and combining working patterns on the basis of working hours required in a prescribed period (e.g., three months) to secure the stock amount. Therefore, it is possible to prevent stock overflow and stockout, and to perform selection processing of operating patterns flexibly.

Note that the present invention is not limited to the embodiment described above, and may be carried out in other various modes. For example, operating patterns are not limited to the three patterns shown in the table 1, and suitable patterns may be set appropriately.

Note that by combining arbitrary embodiments among the various embodiments described above, the effects of the respective embodiments can be achieved.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

### INDUSTRIAL APPLICABILITY

The production scheduling system is used for scheduling production schedules and working patterns in association with the demand for a product to be produced in the production management of a plant.

## Claims

1. A production scheduling system comprising:
a memory (5) with previously stored information on a kind of product capable of being produced in a production facility, production quantity of the product per hour, and a plurality of operating patterns in which working hours per day are different, as basic information;
an input unit (3a) adapted to control input of information on a minimum value and a maximum value of stock quantity and an estimated number of demand for each product to be produced in the production facility is inputted as input information;
a production quantity calculation unit (11) adapted to calculate, when the information on the estimated number of demand for the each product is inputted, a production quantity for the each product in a prescribed period based on the information on the stock quantity and the estimated number of demand;
a production hour processing unit (12) adapted to determine production hours required for producing the product of the production quantity calculated by the production quantity calculation unit (11), based on the information on the estimated number of demand;
a production date determination unit (13) adapted to determine a product delivery date when production of the each product is to be completed in the prescribed period for the each product while allocating to a plurality of days based on the production hours determined by the production hours processing unit (12), such that the stock quantity of the product falls between the minimum value and the maximum value of the stock quantity;
**characterized by**
an operating pattern selection unit (15) adapted to allocate and determine which operating pattern should be selected from the information on the operating patterns for each day in the prescribed period such that the working hours dedicated to produce the product exceed the working hours capable of producing the product within the product delivery date computed by the production date determination unit, and
a production planning unit adapted to make a production plan for the production facility with respect to a temporal axis in a prescribed period,
wherein information on time required for switching a kind of a product to be produced in the production facility is included in the basic information, and
the production date determination unit (13) allocates the production schedule so as to make the number of switching times of the product to be produced maximum within a range capable of securing the necessary production hours.

2. The production scheduling system according to claim 1, wherein the production date determination unit (13) allocates the production schedule such that the stocks do not exceed maximum stocks, based on information on a batch size of the product produced by producing of one time.

3. The production scheduling system according to claim 2, wherein the batch size is determined as a number of packages of products produced in one manufacturing.

4. The production scheduling system according to claim 1, wherein information on a personnel cost per day caused by a work according to the each operating pattern is included in the basic information, and
the operating pattern selection unit (15) selects the operating pattern so as to make the personnel cost for the prescribed period lowest.

5. The production scheduling system according to claim 1, wherein the prescribed period is one to three months from a next day of a day when the information on the estimated number of demand is inputted.

## Patentansprüche

1. Produktionsplanungssystem, umfassend:
einen Speicher (5) mit zuvor gespeicherten Informationen über eine in einer Produktionsanlage herstellbare Art von Produkt, eine Produktionsmenge des Produkts pro Stunde und mehrere Betriebsmuster, bei denen tägliche Arbeitszeiten verschieden sind, als Basisinformationen;
eine Eingabeeinheit (3a), die dazu ausgebildet ist, die Eingabe von Informationen bezüglich eines Mindestwertes und eines Höchstwertes einer Lagermenge zu regeln, und wobei eine geschätzte Bedarfsmenge für jedes in der Produktionsanlage herzustellende Produkt als Eingabeinformationen eingegeben wird;
eine Produktionsmengenberechnungseinheit (11), die dazu ausgebildet ist, wenn die Informationen über die geschätzte Bedarfsmenge für jedes Produkt eingegeben wurden, eine Produktionsmenge für jedes Produkt in einem vorgegebenen Zeitraum basierend auf den Informationen bezüglich der Lagermenge und der geschätzten Bedarfsmenge zu berechnen;
eine Produktionsstundenverarbeitungseinheit (12), die dazu ausgebildet ist, Produktionsstunden, die zum Herstellen des Produkts in der von der Produktionsmengenberechnungseinheit (11) berechneten Produktionsmenge erforderlich sind, auf der Basis der Informationen bezüglich der geschätzten Bedarfsmenge zu ermitteln;
eine Produktionsdatumsermittlungseinheit (13), die dazu ausgebildet ist, ein Produktlieferdatum zu ermitteln, wenn die Produktion des jeweiligen Produkts in dem für jedes Produkt vorgegebenen Zeitraum fertiggestellt werden soll, während mehreren Tagen auf der Basis der durch die Produktionsstundenverarbeitungseinheit (12) ermittelten Produktionsstunden zugewiesen wird, derart, dass die Lagermenge des Produkts zwischen den Mindestwert und den Höchstwert der Lagermenge fällt;
**gekennzeichnet durch**
eine Betriebsmusterauswahleinheit (15), die dazu ausgebildet ist, zuzuweisen und zu bestimmen, welches Betriebsmuster aus den Informationen bezüglich der Betriebsmuster für jeden Tag in dem vorgegebenen Zeitraum ausgewählt werden sollte, derart, dass die Arbeitsstunden, welche dazu bereitgestellt werden, um das Produkt zu erzeugen, jene Arbeitsstunden überschreiten, mittels welcher es möglich ist, das Produkt vor dem Produktlieferdatum, das **durch** die Produktionsdatumsermittlungseinheit berechnet wurde, herzustellen, und
eine Produktionsplanungseinheit, die dazu ausgebildet ist, einen Produktionsplan für die Produktionsanlage in Bezug auf eine Zeitachse in einem vorgegebenen Zeitraum zu erstellen,
wobei Informationen bezüglich Zeit, die zum Umstellen einer Art eines in der Produktionsanlage herzustellenden Produkts erforderlich ist, in den Basisinformationen enthalten sind, und
die Produktionsdatumsermittlungseinheit (13) den Produktionsplan derart zuweist, dass die Anzahl von Umstellzeiten des zu produzierenden Produkts innerhalb eines Bereichs, mit dem es möglich ist, die erforderlichen Fertigungsstunden sicherzustellen, maximal gemacht wird.

2. Produktionsplanungssystem nach Anspruch 1, wobei die Produktionsdatumsermittlungseinheit (13) den Produktionsplan derart zuweist, dass die Lagerbestände maximale Lagerbestände nicht übersteigen, basierend auf Informationen über eine Chargengröße des Produkts, welche durch einen Produktionszeitraum hergestellt wird.

3. Produktionsplanungssystem nach Anspruch 2, wobei die Chargengröße als Anzahl von Packungen von Produkten, die in einer Produktion hergestellt werden, ermittelt wird.

4. Produktionsplanungssystem nach Anspruch 1, wobei Informationen über Personalkosten pro Tag, welche durch eine Arbeit gemäß dem jeweiligen Betriebsmuster verursacht werden, in den Basisinformationen enthalten sind, und
die Betriebsmusterauswahleinheit (15) das Betriebsmuster derart auswählt, dass die Personalkosten für den vorgegebenen Zeitraum am niedrigsten gemacht werden.

5. Produktionsplanungssystem nach Anspruch 1, wobei der vorgegebene Zeitraum ein bis drei Monate ab einem Tag ist, der auf einen Tag folgt, an dem die Informationen über die geschätzte Bedarfsmenge eingegeben werden.

## Revendications

1. Système de planification de production comprenant:
une mémoire (5) avec des informations stockées à l'avance concernant une sorte de produit susceptible d'être produit dans une installation de production, une quantité de production du produit par heure, et une pluralité de modèles de mise en oeuvre dans lesquels des heures de travail par jour sont différentes, en tant qu'informations de base;
une unité d'entrée (3a) conçue pour commander l'entrée d'informations concernant une valeur minimale et une valeur maximale de quantité en stock et un nombre évalué de demandes pour chaque produit à produire dans l'installation de production qui sont entrées en tant qu'informations d'entrée;
une unité de calcul de quantité de production (11) conçue pour calculer, quand les informations concernant le nombre évalué de demandes pour chaque produit sont introduites, une quantité de production pour chaque produit dans une période prédéterminée en se basant sur les informations concernant la quantité en stock et le nombre évalué de demandes;
une unité de traitement d'horaire de production (12) conçue pour déterminer des heures de production exigées pour produire le produit selon la quantité de production calculée par l'unité de calcul de quantité de production (11), en se basant sur les informations concernant le nombre évalué de demandes;
une unité de détermination de date de production (13) conçue pour déterminer une date de livraison de produit quand la production de chaque produit doit être achevée dans la période prédéterminée pour chaque produit tout en attribuant une pluralité de jours en se basant sur les heures de production déterminées par l'unité de traitement d'heures de production (12), de sorte que la quantité en stock du produit tombe entre la valeur minimale et la valeur maximale de la quantité en stock;
**caractérisé par**
une unité de sélection de modèle de mise en oeuvre (15) conçue pour attribuer et déterminer quel modèle de mise en oeuvre devrait être sélectionné à partir des informations concernant les modèles de mise en oeuvre pour chaque jour dans la période prédéterminée de sorte que les heures de travail consacrées à produire le produit excèdent les heures de travail susceptibles de produire le produit avant la date de livraison de produit calculée par l'unité de détermination de date de production, et
une unité de planification de production conçue pour établir un plan de production pour l'installation de production par rapport à un axe temporel dans une période prédéterminée,
dans lequel des informations concernant le temps nécessaire pour changer une sorte d'un produit à produire dans l'installation de production sont incluses dans les informations de base, et
l'unité de détermination de date de production (13) attribue le programme de production de façon à rendre le nombre de changements du produit à produire maximal dans une plage susceptible de garantir les heures de production nécessaires.

2. Système de planification de production selon la revendication 1, dans lequel l'unité de détermination de date de production (13) attribue le programme de production de sorte que les stocks n'excèdent pas des stocks maximaux, en se basant sur des informations concernant une taille de lot du produit fabriqué par une production ponctuelle.

3. Système de planification de production selon la revendication 2, dans lequel la taille de lot est déterminée en tant que nombre de lots de produits fabriqués dans une fabrication particulière.

4. Système de planification de production selon la revendication 1, dans lequel des informations concernant un coût journalier de personnel causé par un travail selon chaque modèle de mise en oeuvre sont incluses dans les informations de base, et
l'unité de sélection de modèle de mise en oeuvre (15) sélectionne le modèle de mise en oeuvre de façon à rendre le coût de personnel pendant la période prédéterminée le plus bas.

5. Système de planification de production selon la revendication 1, dans lequel la période prédéterminée est d'un à trois mois à partir d'un jour suivant le jour où les informations concernant le nombre évalué de demande sont entrées.
